Europäisches Patentamt

European Patent Office

Office européen des brevets

(11) Publication number: 0 079 226
A1

# EUROPEAN PATENT APPLICATION

(21) Application number: 82305929.0

(51) Int. Cl.³: H 01 M 6/32

(22) Date of filing: 08.11.82

(30) Priority: 11.11.81 GB 8134036

(43) Date of publication of application:
18.05.83 Bulletin 83/20

(84) Designated Contracting States:
DE FR IT

(71) Applicant: THE MARCONI COMPANY LIMITED
The Grove Warren Lane
Stanmore Middlesex HA7 4LY(GB)

(72) Inventor: Hayes, Martin
125 Woodland Drive
Watford, WD1 3DA Hertfordshire(GB)

(72) Inventor: Gosden, Cary
6 Adam Close
High Wycombe HP13 6BY Buckinghamshire(GB)

(74) Representative: Keppler, William Patrick
The General Electric Company, p.l.c. Central Patent
Department (Wembley Office) Hirst Research Centre
East Lane
Wembley, Middlesex HA9 7PP(GB)

(54) Electrochemical reserve cells.

(57) An electrochemical reserve cell, or reserve battery comprising several electrochemical reserve cells, which has a short activation time, and is of relatively small dimensions. The cell comprises at least two electrodes (3,7) through each of which a number of paths extend which allow electrolyte solution to pass through each of the two electrodes towards another electrode (5) in order to activate the cell.

Fig. 1.

EP 0 079 226 A1

This invention relates to electrochemical reserve cells. By electrochemical reserve cell is meant an electrochemical cell including a number of electrodes and a store of electrolyte held out of contact with the electrodes until activation is required. The invention has particular relevance to electrochemical reserve cells, or combinations of electrochemical cells forming a reserve battery, which are used in applications in which a short activation time for the cells is necessary and in which the cell or battery is of relatively small dimensions, e.g. in a missile.

In a known electrochemical cell, comprising two planar electrodes, in order to enable a short activation time to be achieved one of the electrodes, i.e. either the anode or cathode, is perforated. This allows electrolyte solution, on activation of the cell, to pass through the perforated electrode to contact the other electrode and thus allow current to flow through an external circuit connected to the cell. It is found, however, that for most practical applications the electrodes have to have an unacceptably high surface area to achieve a reasonable current. Additionally in order to obtain a substantial voltage it is necessary to connect several cells together to form a pile, or bipolar stack reserve battery. In conventional reserve batteries the electrodes of each cell are often in the form of discs, with a hole cut from the centre. When assembled in a pile to form a battery, with a similarly shaped porous separator lying between and in contact with each pair of electrodes, a cylindrical channel is formed along the longitudinal axis of the battery. To activate the battery, electrolyte solution is arranged to flow down the channel, it then spreads radially outwards through each separator to contact the surfaces of the electrodes. This arrangement, however, suffers the disadvantage that in order to allow the electrolyte solution to flow quickly between the pairs of electrodes the inter-electrode separation has to be comparatively large. Furthermore the central channel can cause the loss of a significant proportion of the electrode area. In batteries including bipolar electrodes the presence of the channel can lead to bipolar leakage currents.

It is an object of the present invention to provide an electrochemical reserve cell or a reserve battery composed of electrochemical cells wherein at least some of these disadvantages are alleviated.

According to a first aspect of the present invention there is provided an electrochemical reserve cell comprising three or more electrodes including at least two electrodes through each of which a plurality of paths extend which allow electrolyte solution to pass through each of said two electrodes toward another electrode.

In one embodiment of the invention each of said at least two electrodes comprises major surfaces on opposite sides, each of said paths being in the form of a passage which runs through the respective electrode from one major surface of the electrode to the opposite surface.

Preferably said passages are distributed evenly throughout said respective electrode.

Preferably said passages are of uniform size.

In one embodiment of the invention at least one of said two electrodes consists of an electrochemically active material supported on a substrate. In this case said substrate is suitably composed of a porous material. Alternatively said substrate is composed of a perforated sheet of material. At least part of said electrochemically active material is suitably situated on one of the major surfaces of said substrate. Alternatively, or

-4-

additionally, at least part of said electrochemically active material is situated in the paths through the substrate. In the case where said at least one electrode is a bipolar electrode, preferably said substrate exhibits a high effective resistance to bipolar currents.

In one particular battery including a plurality of electrochemical reserve cells in accordance with the invention there is provided a plurality of insulating means physically separating said cells; and means for providing electrolyte solution substantially simultaneously to each of said cells.

Preferably the dimensions of each of the insulating means exceeds that of the associated cells in the direction from which the electrolyte solution is provided.

Four electrochemical reserve cells, and three reserve batteries composed of electrochemical cells, in accordance with the invention will now be described, by way of example only, with reference to accompanying figures in which:-

Figure 1 is a schematic diagram of a cross section through the first electrochemical cell;

Figure 2 is a voltage-time plot for the first and second electrochemical cells;

Figure 3 is a voltage-time plot for the third electrochemical cell;

Figure 4 is a plan view of the first battery;

Figure 5 is a cross section along the line V-V of Figure 4;

Figure 6 is a voltage-time plot for the battery of Figure 4;

Figure 7 is a schematic diagram of a cross section through the second battery;

Figure 8 is a schematic diagram of a cross-section through the fourth electrochemical cell; and

Figure 9 is a schematic diagram of a cross section through the third battery.

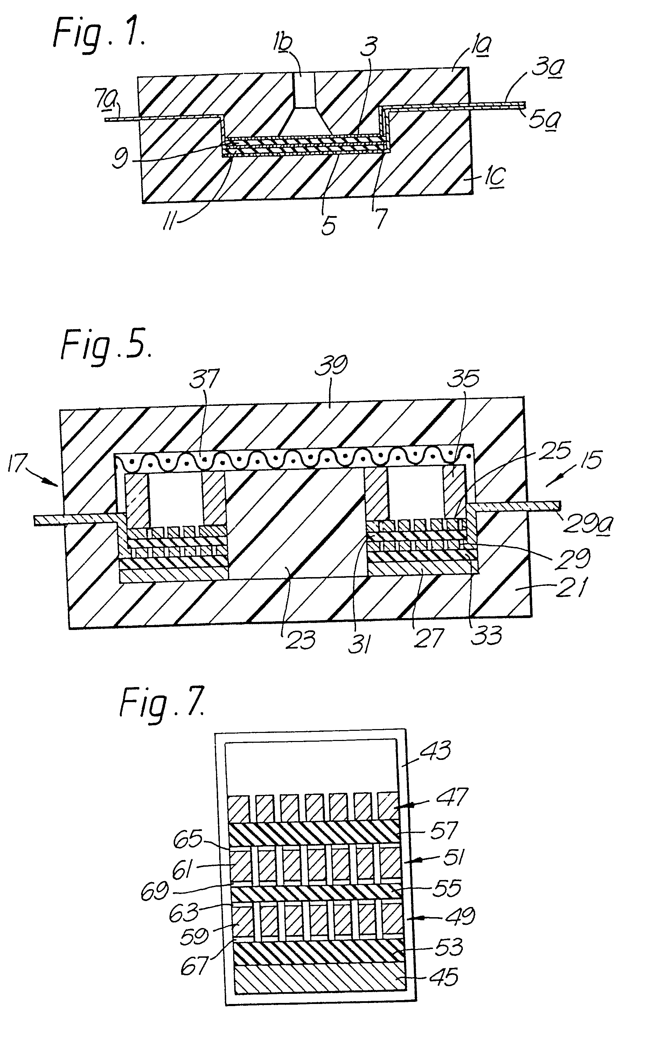

Referring firstly to Figure 1, the first cell to be described consists of an electrically insulating container comprising a lid 1a through which extends an aperture 1b, and a base 1c. Within the base 1c are first and second planar cathode electrodes 5, 5, and between the cathode electrodes a planar anode electrode 7. Each electrode 3,5,7 has a respective electrically conductive lateral extension 3a, 5a, 7a which extends outside the container to form respective electrode leads, the cathode electrode leads 3a, 5a both extending to the right of the container, and the anode electrode lead 7a extending to the left as viewed in the figure. Separating the anode electrode 7 and the two cathode electrodes 3,5 respectively are two glass fibre separators 9, 11.

The cathode electrodes 3,5 are formed from a substrate of expanded nickel grid coated with strips of a carbon paste consisting of Shawinigan 50% compressed acetylene black and PTFE suspension in acetone, which has been sintered at 350° for 15 minutes. The anode electrode 7 is formed from strips of lithium foil pressed on to a substrate of expanded nickel grid, the electrodes 3,5,7 being arranged within the base 1c of the container so that the lithium strips on the anode electrode 7 coincide approximately with the strips of carbon paste on the cathode electrodes 3,5. Connected to the container lid 1a is a receptacle (not shown) holding electrolyte solution in the form of lithium aluminium chloride and aluminium chloride dissolved in thionyl chloride.

In use the lid 1a and the base 1c of the container are pressed together by a clip (not shown) to form an enclosure, the lid and base pressing the cathode electrode leads 3a,5a together so that the cathode electrodes 3,5 are electrically connected. To activate the cell electrolyte solution is arranged to flow through the aperture 1b in the lid 1a of the container, onto the upper surface of the electrode 3. The electrolyte solution then passes through the holes in the nickel grid of the electrode 3,

through the holes in the nickel grid of the electrode 7, through the separator 11 to reach the electrode 5, thus causing electrical contact to be made between the three electrodes, and allowing current to be drawn from the cell. A cell of this type generally has a short operational life, in the order of minutes or even seconds.

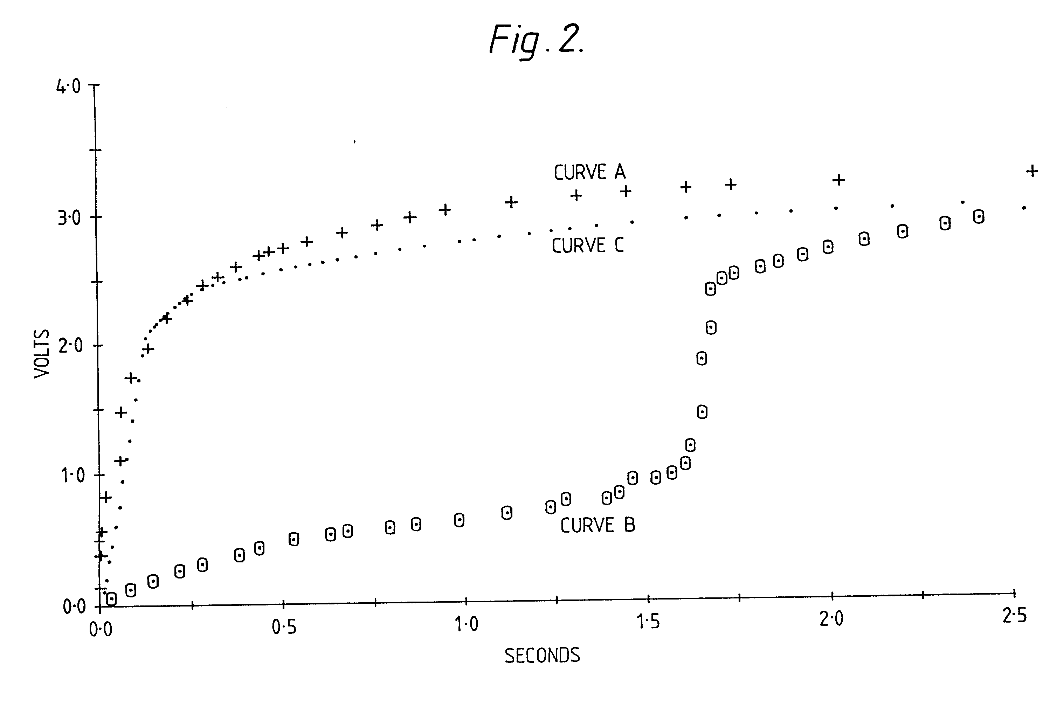

In one particular cell in which the active area of the three electrodes is approximately four square centimetres, when a constant current load of 200 mA was connected to the unactivated cell, curve A of the voltage-time plot shown in Figure 2 was obtained on activation of the cell. For comparison curve B shows the voltage-time plot for a comparable cell in which the cathode electrodes are impervious to electrolytic solution. It will be appreciated that to enable the electrolytic solution to flow quickly through the cell it is only necessary to have perforations in the upper cathode 3 and the anode 7. As the carbon coating may be positioned within the holes within the nickel grid of the cathodes however, it is advantageous to use a nickel grid for the second cathode electrode 5 in order to increase the effective electrode area.

The second cell to be described is identical to the first cell described herebefore, except that the cathode electrodes are formed by pieces of carbon cloth (Le Carbone Ltd., type TCM 128) cut to the appropriate size, a substrate expanded nickel grid acting as a current-collector support for the pieces of cloth, and lateral extensions of the grid acting as electrode contacts as in the previous example. One particular cell, activated as in the first example, gave the voltage-time plot shown as curve C in Figure 2 on activation.

In the third cell to be described, the cell is again of similar form to that of the first cell above .

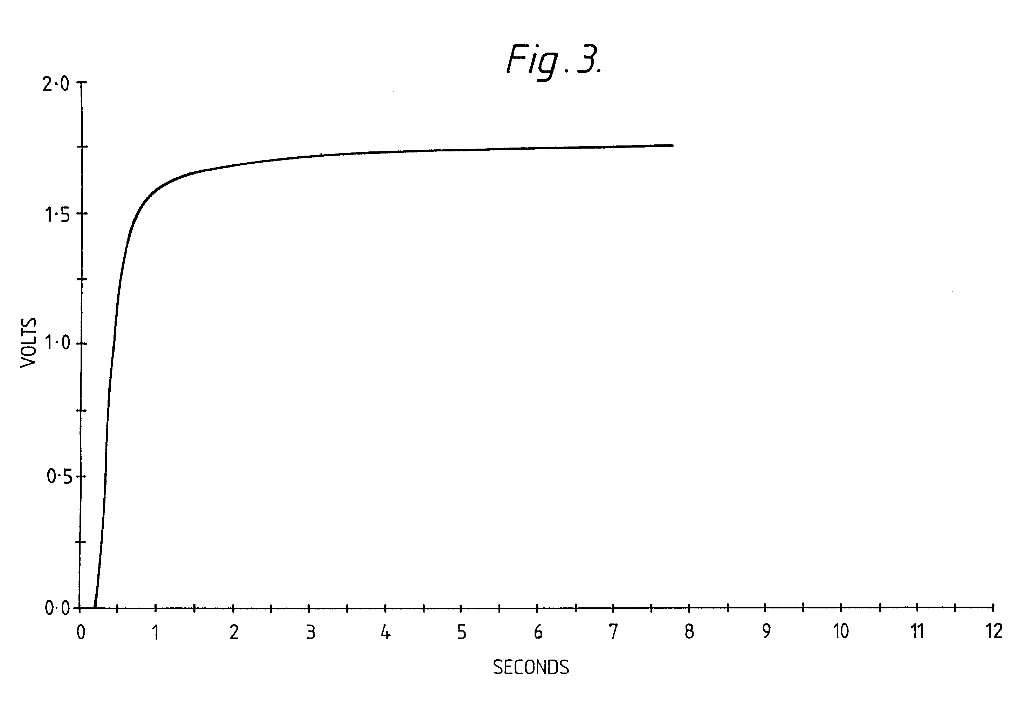

The two cathode electrodes are, however, in the form of lead electroplated onto a substrate of expanded nickel grid, whilst the anode electrode is in the form of lead dioxide plated onto both sides of a substrate of expanded nickel grid. The electrolyte solution used is in the form of an aqeous solution containing 42% by weight of fluoroboric acid and the spacers between the two cathodes and the anode are made of woven polypropylene. In one particular cell in which the active area of each of the electrodes is thirty-six square centimetres, when connected to a constant current load of 2 amps, the voltage-time plot shown in Figure 3 was obtained on activation of the cell.

It will be appreciated that the principle behind the three cells described herebefore can readily be extended to a cell containing more than three electrodes, alternate electrodes being connected together to form a multi-electrode single cell. It will also be appreciated that whilst each of the cells described herebefore contains two cathode and one anode electrode, equally two anode and one cathode electrode could be included in the cell.

It will also be appreciated that many other combinations of materials for the electrodes, and the electrolyte solution are possible. For example the substrates for each of the electrodes may consist of any material having paths through which electrolyte solution may easily pass from one major surface of electrode to the other major surface. Suitable materials therefore are perforated sheets, gauze or meshes formed from nickel, silver, or copper etc. Alternatively the substrate may be formed from a porous material, e.g. a ceramic which has been treated in order to make it electrically conductive. The electrochemically active material may be applied to the substrate by any of the conventional methods, i.e. electroplating, vacuum deposition, electrophoretic deposition etc.

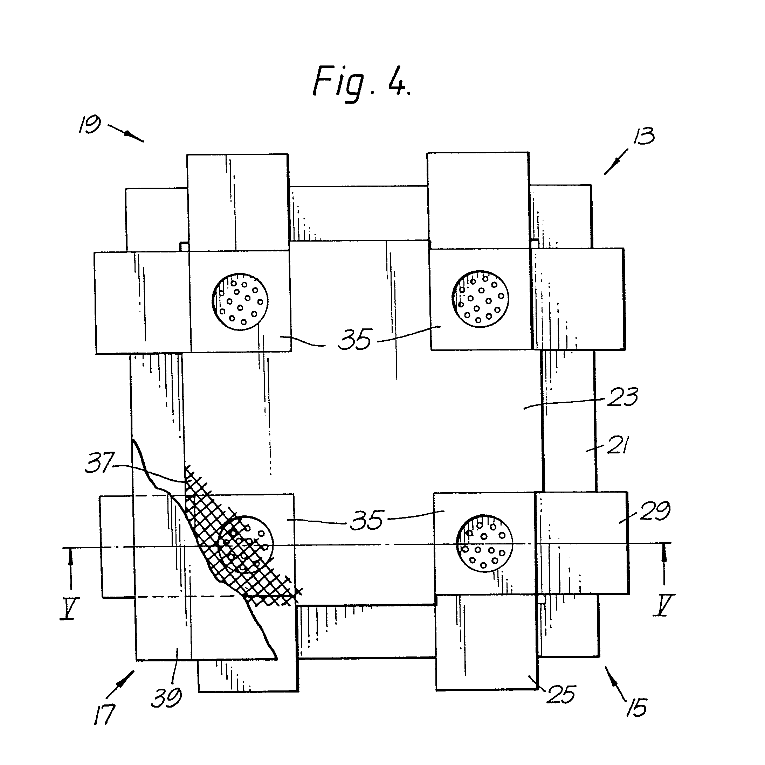

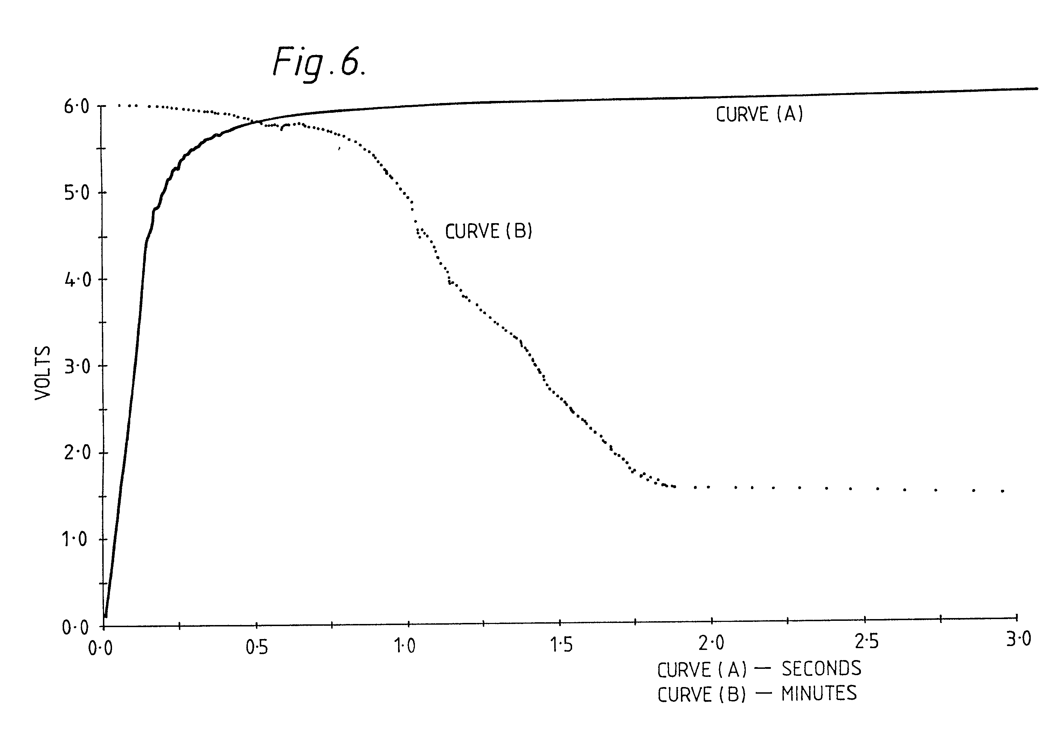

The principle behind the three cells described herebefore can readily be extended to a multicell battery. Referring now to Figures 4 and 5 a reserve battery consists of substantially identical four cells 13, 15, 17, 19 within the base 21 of an insulating container separated by a cross shaped PTFE divider 23. Each cell consists of two cathode electrodes 25, and an anode electrode 29 of similar form and construction to the third cell described herebefore, separated by woven polypropylene separators 31, 33. The electrodes 25, 27, 29 are arranged within each cell 13, 15, 17, 19 such that the lateral extensions 25a, 27a, 29a, of each electrode forming the electrode leads extend outside the base 21 of the container, the two cathode electrode leads extending in the same direction. On top of each cell is placed a respective PTFE spacer washer 35 of dimensions such that the top of each washer is on a level with the top of the divider 23. Over the divider 23 and four cells 13, 15, 17, 19 is placed a rigid stainless steel grid 37 which is clamped on to the cells by the lid 39 of the container such that pressure is applied to each cell to keep the cell components together. External connections (not shown) are provided to the electrode leads 25a, 27a, 29a so that the cells are connected in series to form a four-cell battery. A receptacle (not shown) containing electrolyte solution in the form of a 42 wt.% fluroboric acid aqueous solution is connected to the container lid 39.

To activate the battery, in similar manner to that of the cells previously described, electrolytic solution is arranged to flow into the container, through the stainless steel grid 37 onto the upper electrodes 25 within each cell. The electrolyte solution then passes through the electrodes 25, 29 and the spacers 31 and 33 to contact the lowermost electrodes 27 thus simultaneously activating the four cells. The amount of electrolyte solution provided is such that the upper electrodes 25 are not electrically connected by the electrolyte solution after activation of the battery.

In one particular battery in which the active rea of each of the electrodes is 4 square centimetres, connected to a constant current load of 250m$^A$, the discharge curve shown in Figure 6 was obtained on activation of the battery.

It will be appreciated that the number of individual cells within the above described battery is not limited to four, but may be determined by the desired battery voltage by appropriate design of the divider 23.

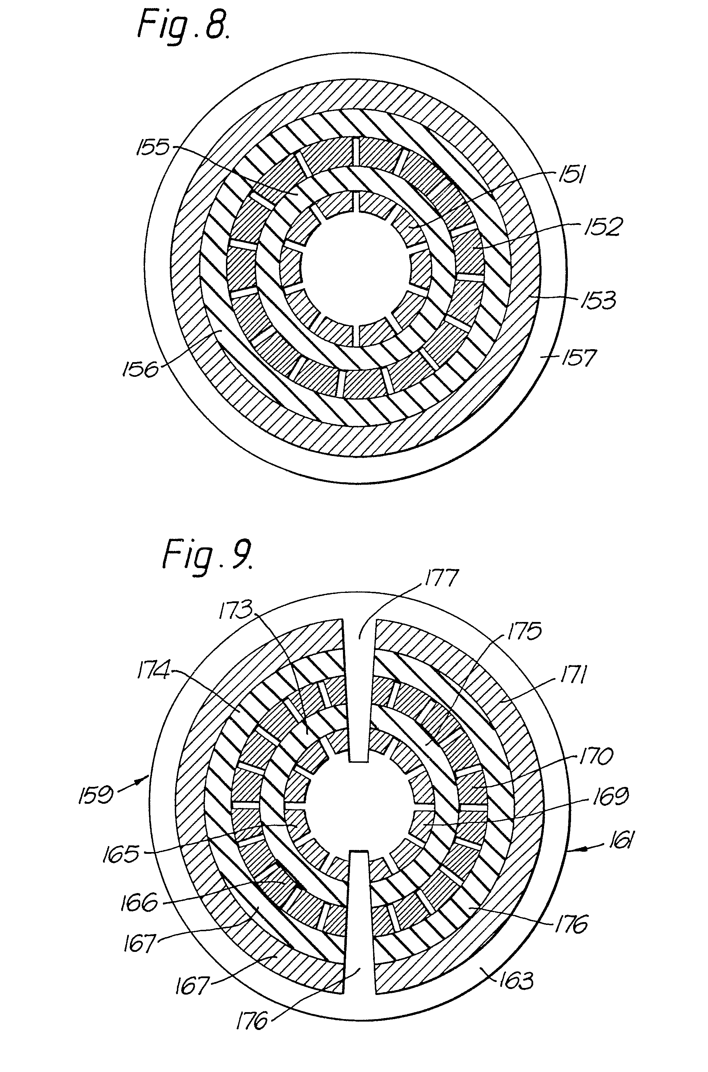

Referring now to Figure 7, which depicts a bipolar or pile reserve battery, a container 43 contains a planar cathode electrode 45, a planar anode electrode 47, and between the two electrodes two bipolar planar electrodes 49, 51, the stack of electrodes 45, 49, 51, 47 all being separated from each other by porous separators 53, 55, 57. The electrode 47 is of similar form to electrode 7 in the first example in that electrochemically active material suitable for an anode electrode is supported on a substrate having through it a series of passages through which electrolyte solution is able to pass. The electrode 45 is of conventional form.

The bipolar electrodes 49, 51 each consist of a spacer 59, 61 having a number of passages through them through which electrolyte solution is able to pass from one side of the electrode to the other. Each spacer 59, 61 is formed of any of a variety of materials such as gauze, porous sintered sheet, perforated sheet etc, as in the substrates of the previous examples, the electrical conductivity of the material being chosen for the particular application. When insulating material is used for the spacers 59, 61, the required electrical conductivity may be achieved by having a layer of metal on each surface, and plated-through passages. On one surface 63, 65 of each spacer 59, 61 is deposited a layer of the electrochemically active material which forms the negative electrode; on the opposing surfaces 67, 69 of the electrodes is deposited a layer of the electrochemically active material which forms the positive electrode.

To activate the battery, as in the first examples electrolyte solution is arranged to flow into the container 43, to pass through the successive electrodes and separators 47, 57, 51, 55, 49, 53 to reach the electrode 45, thus allowing current to flow. The thickness of the spacers 59, 61 in the two bipolar electrodes 49, 51, together with the cross-section and the tortuous nature of the passages through the spacers 59, 61 are chosen to inhibit bipolar leakage currents after activation of the cell, while still facilitating electrolyte solution transfer during activation. A possibility for further reducing bipolar leakage currents is to arrange for the electrolyte solution to leave a deposit within the passages during activation, which effectively chokes up the passages.

The examples so far described have been cells having parallel planar electrodes, but it will be appreciated that electrodes of other shapes and dispositions may be employed in accordance with the invention. Referring now to Figure 8 an electrochemical cell for use in a projectile consists of three concentric cylindrical electrodes 151, 152, 153 of alternating polarities separated by respective porous separators 155, 156 within a cylindrical metal can 157 an electrical connection (not shown) being provided between the electrodes 151 and 153. The electrode 153 is of conventional form and touches the inner surface of the can 157 whilst the electrodes 151 and 152 are each composed of a substrate through which a series of essentially radially directed channels run, suitable electrochemically active material being supported on the substrates as in the first example. Also contained within the can 157 is a receptacle (not shown) containing electrolyte solution. When the projectile is fired the projectile spins, the receptacle containing the electrolyte solution thus breaking, and the spinning action of the projectile forcing the electrolyte solution radially outwards, through the passages in the electrodes 151 and 152 and the separators 155 and 156 to contact the outer electrode 157 and thus activate the cell.

The principle behind this example can readily be extended to a multicell battery. Referring now to Figure 9, a battery for use in the projectile described in the previous example consists of two cells 159, 161 within a metal can 163. The can is lined with an insulating material to prevent it from short circuiting the two cells. Each cell consists of three hemi-cylindrical electrodes of alternating polarity, 165, 166, 167 and 169, 170, 171 respectively, each pair of electrodes being separated by respective porous separators 173, 174 and 175, 176 respectively. The two cells 159, 161 fit together within the can 163 to form a substantially cylindrical battery, the cells being insulated from each other by insulators 176, 177 which protrude past the inner electrodes 165, 169 into the space enclosed by the cells. The outer electrodes 167, 171 are of conventional form, whilst the other electrodes are each of similar form to the electrodes 151 and 152 in the previous example respective electrical connections (not shown) connecting the electrodes 165 and 167, and also 169 and 171. Electrical

-12-

connections (not shown) are also provided between the two cells to connect them in series, or in parallel as appropriate for the particular application of the battery ; the inter-cell connections run through the insulators 176, 177. As in the previous examples a receptacle (not shown) containing electrolyte solution is also contained within the can 163. Activation of the battery occurs in similar manner as in the previous example. On the breakage of the receptacle containing the electrolyte solution, electrolyte solution flows through the two inner electrodes 165, 169 virtually simultaneously to activate the two cells 159, 161. As the electrolyte solution is forced by centrifugal forces radially outwards towards the wall of the can 163, the protrusion of the insulators 176, 177 into the space enclosed by the cells 159, 161 prevents the electrolyte solution from electrically connecting the two cells.

It will be appreciated that the number of individual cells within the above described battery is not limited to two, but may be determined by the desired battery voltage, although the ultimate number of cells will be limited by the increased complexity of construction of the battery.

It will be appreciated that in all the examples described above electrodes other than those depicted as such may additionally, or alternatively, contain paths through which electrolyte solution may flow. It will also be appreciated that whilst all the paths in the diagrams are depicted as being equally spaced, cylindrical passages this is for the sake of clarity in the diagrams, and in practice the passages may be of any shape, size, tortuous nature, and distribution over the electrode, consistent with their function of rapidly conveying electrolyte solution.

-13-

It will also be appreciated that whilst the above examples describe electrodes which are either basically cylindrical or planar in form, many other possibilities in accordance with the invention exist, for example spirally-wound electrodes within a cylindrical can.

-14-

<u>Claims</u>

1.      An electrochemical reserve cell comprising three or more electrodes characterised in that it includes at least two electrodes (3,7) through each of which a plurality of paths extend which allow electrolyte solution to pass through each of said two electrodes towards another electrode (5).

2.      A cell according to Claim 1 in which each of said at least two electrodes comprises major surfaces on opposite sides, each of said paths being in the form of a passage which runs through the respective electrode from one major suface of the electrode to the opposite surface.

3.      A cell according to Claim 2 in which said passages are distributed evenly throughout said respective electrode (3,7).

4.      A cell according to Claim 2 or 3 in which said passages are of uniform size.

5.      A cell according to anyone of the preceding claims in which at least one of said at least two electrodes (3, 7) consists of an electrochemically active material supported on a substrate.

6.      A cell according to Claim 5 in which said substrate is a porous material.

7.      A cell according to Claim 5 in which said substrate is composed of a perforated sheet of material.

8.      A cell according to any one of Claims 5 to 7 in which at least part of said electrochemically active material is situated on one of the major surfaces of said substrate.

9.      A cell according to any one of Claims 5 to 8 in which at least part of said electrochemically active material is situated in the paths through the substrate.

10.      A cell according to any one of Claims 5 to 9 in which said at least one electrode (49, 51) is a bipolar electrode, and said substrate (59, 61) exhibits a high effective resistance to bipolar currents.

11. A cell according to any one of the preceding claims in which said two electrodes are planar and substantially parallel.

12. A cell according to any one of Claims 1 to 10 in which said two electrodes (151, 152) are basically cylindrical in form.

13. A reserve battery incorporating a plurality of cells (13, 15, 17, 19) according to any one of the preceding claims in which there is provided a plurality of insulating means (23) physically separating said cells; and means for providing electrolyte solution substantially simultaneously to each of said cells.

14. A reserve battery according to Claim 13 in which the dimensions of each of the insulating means exceeds that of the associated cells in the direction from which the electrolyte solution is provided.

Fig. 1.

Fig. 5.

Fig. 7.

Fig. 2.

Fig.3.

3/6

0079226

# Fig. 4.

Fig.6.

CURVE (A)

CURVE (B)

VOLTS

5/6

0079226

CURVE (A) — SECONDS
CURVE (B) — MINUTES

Fig.8.

Fig.9.

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | H 01 M 6/32 |
| X | DE-A-2 807 852 (THE SECRETARY OF STATE FOR DEFENCE) *Page 6, last paragraph; page 7, page 8, paragraph 1* | 1-4 | |
| | --- | | |
| X | US-A-3 201 279 (JOHN J.ROOT) *Column 1, lines 46-64; column 2, lines 1-36; column 3, lines 61-75; column 4* | 1,2,3, 4,5 | |
| | --- | | |
| X | US-A-2 990 441 (PAUL MARSAL) *Column 1, lines 54-59; column 2* | 1,2,10 | |
| | --- | | |
| Y | GB-A-1 209 336 (SOCIETE LES PILES WONDER) *Page 3, lines 76-130; page 4, lines 1-39* | 1-4 | TECHNICAL FIELDS SEARCHED (Int. Cl. 3) |
| | --- | | H 01 M 6/32 |
| Y | US-A-3 285 782 (WILSON N.CARSON) *Column 2, lines 15-65; columns 3,4, lines 1-29* | 1,10 | H 01 M 6/34 H 01 M 6/38 H 01 M 10/04 |
| | --- | | |
| A | GB-A-1 406 188 (JOHN CHARLES BOGUE) | | |
| | --- | | |
| A | US-A-3 445 295 (HOLLEY R.SMITH) | | |
| | --- -/- | | |

The present search report has been drawn up for all claims

| Place of search THE HAGUE | Date of completion of the search 16-02-1983 | Examiner DE VOS L.A.R. |
|---|---|---|

European Patent
Office

**EUROPEAN SEARCH REPORT**

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int Cl. ³) |
| A | US-A-3 963 519 (HONG PO LOUIE) | | |
| | ----- | | |
| | | | TECHNICAL FIELDS SEARCHED (Int. Cl. ³) |

The present search report has been drawn up for all claims

| Place of search | Date of completion of the search | Examiner |
|---|---|---|
| THE HAGUE | 16-02-1983 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82